# EUROPÄISCHE PATENTSCHRIFT

(11) **EP 2 896 549 B1**
(45) Veröffentlichungstag und Bekanntmachung des Hinweises auf die Patenterteilung: **07.03.2018**
(21) Anmeldenummer: 15156304.6
(22) Anmeldetag: 21.09.2010
(51) Int. Cl.: B62D 21/02, B62D 21/20

(54) **Anhänger, insbesondere Tiefladeanhänger**
Trailer, in particular flat-bed trailer
Remorque, en particulier remorque de camion surbaissé

(30) Priorität: 30.09.2009 DE 202009011093 U
(43) Veröffentlichungstag der Anmeldung: 22.07.2015
(62) Teilanmeldung aus: 10765979.9
(73) Patentinhaber: Humbaur, Ulrich, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- EP-A2- 1 609 704
- WO-A1-2006/117395
- DE-A1-102006 039 930
- DE-U1- 9 110 120
- US-A- 5 417 453

## Beschreibung

Die Erfindung betrifft einen Anhänger, insbesondere einen Tiefladeanhänger, mit den Merkmalen im Oberbegriff des Hauptanspruchs.

Ein solcher Anhänger ist aus der US 5,417,453 A bekannt. Er ist als Sattelauflieger mit einem rahmenartigen Fahrgestell mit mehreren miteinander verbundenen Längsträgern und Querträgern und einem Königszapfen mit einer Drehachse ausgebildet. An der Vorderseite des Fahrgestells ist eine Sandwichplatte angeordnet, die eine obere und eine untere Platte und rechtwinklig gekreuzte, längs und quer verlaufende Stützstege sowie einen Hohlraum dazwischen aufweist.

Die EP 1 609 704 A2, DE 10 2006 039 940 A und WO 2006/117395 zeigen ähnliche Anhänger mit einer frontseitigen Sandwichplatte.

Aus der DE 201 21 479 U1 ist ein Tiefladeanhänger bekannt, der ein Fahrgestell mit mehreren Längsträgern und Querträgern aufweist, die einen Hauptrahmen bilden und miteinander durch Schweißen verbunden sind. Die Querträger erstrecken sich über die gesamte Rahmenbreite und sind durch Öffnungen in den inneren Längsträgern durchgesteckt. Der Tiefladeanhänger besitzt einen in der Höhen abgestuften Ladeboden mit einer frontseitigen Abkröpfung, um unter Beibehaltung der Rahmenstruktur und Rahmenhöhe genügend Bodenfreiheit für einen Drehschemel mit einer Deichsel zu erhalten.

Es ist Aufgabe der vorliegenden Erfindung, ein besseres Fahrzeug aufzuzeigen.

Die Erfindung löst diese Aufgaben mit den Merkmalen im Hauptanspruch.
Das Fahrgestell des Anhängers weist an der Vorderseite eine Sandwichplatte mit einer oberen und einer unteren Platte und Stützstegen sowie einem Hohlraum dazwischen auf. Stützstege sind dabei in einem Kranz um die Drehachse der Zugeinrichtung des Anhängers angeordnet.

Der Ladeboden des Anhängers kann als durchgehende Plattform ausgebildet sein, wobei zur Erzielung einer großen Bodenfreiheit der vordere Fahrgestellbereich, insbesondere ein Frontmodul, eine dünne Sandwichplatte aufweisen kann. Dies ist günstig, um eine Zugeinrichtung unter der Sandwichplatte unterbringen zu können und trotzdem die hohen Lasten aufnehmen und abtragen zu können. Diese Zugeinrichtung kann dabei wahlweise ein Drehschemel mit einer Deichsel, eine Satteleinrichtung oder dgl. sein. Der in der Sattelplatte befindliche Hohlraum hat außerdem den Vorteil, dass hier Versorgungsleitungen für Strom, Druckluft oder dgl. durchgeführt werden können.

Das Fahrzeug erlaubt es, die Quer- und Längsträger mittels bolzenartiger Verbindungselemente zu verbinden. Hierdurch kann insbesondere ein Baukastensystem zur Bildung von Fahrzeugen und Fahrgestellen geschaffen werden, welches eine große Bandbreite von Fahrzeugtypen mit möglichst wenigen Fahrgestellkomponenten abdeckt.

Das Fahrgestell kann weitgehend oder vollständig ohne Schweißverbindungen, Lötverbindungen oder andere wärmeeinbringende Verbindungen auskommen. Dies gilt insbesondere für die Verbindungsstellen zwischen den Längs- und Querträgern. Auch eine Aufteilung von Längsträgern in mehrere Trägerteile mit solchen bolzenartigen Verbindungen ist möglich. Ein Teil des Fahrgestells kann auch geschweißt sein. Dies kann z.B. ein für mehrere Fahrzeugvarianten gleich bleibender Zentralrahmen sein.

Die Sandwichplatte kann auch bei anderen Fahrgestellkonstruktionen, insbesondere solchen mit konventioneller Bauart, eingesetzt werden. Sie kann auch bei Fahrzeugen, insbesondere Tiefladeanhängern, Verwendung finden, die in konventioneller Weise als Schweißkonstruktionen oder dgl. ausgebildet sind.

Ein besonderer Vorteil liegt in der Variationsbreite der Fahrgestellkonstruktionen. Zwischen Standard-Längsträgern können Querträger in der jeweils gewünschten Form, Zahl und Position eingebaut und befestigt werden. Hierbei kann auf Kundenwünsche hinsichtlich Lastverteilung, lokale Rahmenverstärkung oder dgl. Rücksicht genommen werden. Außerdem erlauben die Bolzenverbindungen einen bedarfsweisen Umbau des Fahrgestells oder im Schadensfall einfache, lokal begrenzte und wenig aufwändige Reparaturen.

Die Fahrzeuge und Fahrgestelle können auf einfache und kostengünstige Weise an unterschiedlichste Kundenwünsche angepasst werden, wobei auch Sonderformen und Einzelanfertigungen wirtschaftlich sind. Der Kunde kann aus dem Baukastensystem seine gewünschte Konfiguration zusammenstellen, die dann auch kurzfristig verfügbar ist. Die Lagerhaltung und die Logistik können durch das Baukastensystem ebenfalls optimiert werden. Das Baukastensystem kann ferner mit einem Modulsystem von Fahrgestellkomponenten ergänzt werden.

Das Fahrzeug und sein gebolztes oder geschraubtes Fahrgestell haben die gleiche Stabilität und Belastbarkeit wie die vorbekannten komplett geschweißten Konstruktionen, wobei besondere Vorteile und Verbesserungen beim Korrosionsschutz und der Wirtschaftlichkeit bestehen. Die Bolzen- oder Schraubkonstruktion ist andererseits höher dauerbelastbar und zeigt nicht die Rissempfindlichkeit von Schweißkonstruktionen.

Zwischen die unmittelbar benachbarten Längsträger können kurze Querträger eingebaut werden, die an beiden Enden mit den jeweils benachbarten Längsträgern und vorzugsweise mit deren aufrechten Stegen, verbunden werden. An der anderen Längsträgerseite kann ein weiterer Querträger angebaut werden, der ggf. mit dem ersten Querträger fluchtet. Der Steg des Längsträgers kann dabei für eine optimale Kraftübertragung zwischen die Stützplatten der beiden Querträger eingespannt werden. Die Querträger können auch bedarfsweise zueinander versetzt angeordnet sein. Der Aufbau einer über die Fahrgestellbreite reichenden Quertragkonstruktion aus mehreren kurzen Querträgern hat Vorteile für die Stabilität, insbesondere die Torsionsstabilität, und für die Standfestigkeit des Fahrgestells bei hohen Traglasten und in schwierigem, unebenem Gelände.

Ferner können lange Querträger vorhanden sein, die sich über die gesamte Rahmen- oder Fahrgestellbreite erstrecken und die an den randseitigen Längsträgern befestigt sind. Dies ist z.B. bei Radmulden und entsprechenden Absenkungen an den äußeren Längsträgern möglich. Die langen Querträger können dabei die mittleren oder inneren Längsträger unterqueren. Ein Durchstoßen von Längsträgern mit durchgesteckten Querträgern ist bei der beanspruchten Fahrgestellkonstruktion nicht erforderlich. Hierdurch können die Längsträger eine höhere Stabilität haben. Andererseits können die Längsträger einen Anschlussraster mit einer Vielzahl von vorbereiteten Durchgangsöffnungen für bolzenartige und ggf. lösbare Verbindungselemente aufweisen, die einen Querträgeranbau in unterschiedlichen Positionen und ggf. auch eine nachträgliche Umrüstung ermöglichen.

Das Fahrgestell kann modular aufgebaut sein, wobei zwei oder mehr Module in Längsrichtung und/oder in Querrichtung gebildet werden. Die Module in Längsrichtung können durch formschlüssige Abstützungen nebst bolzenartiger Verbindungselemente miteinander verbunden werden. Die bolzenartigen Verbindungen können lösbar sein und einen Modultausch ermöglichen. Eine Modularität in Querrichtung ist durch einen Anbau unterschiedlicher Seitenrahmen an einen Zentralrahmen möglich. Die Seitenrahmen können sich in der Breite, in der Anordnung und Positionierung von Radmulden, von Muldenabdeckungen oder dgl. unterscheiden.

Die bolzenartigen Verbindungen können insbesondere aus Schließringbolzen bestehen, die sich beim Anziehen in die Durchgangsöffnung quetschen und diese dicht ausfüllen. Hierdurch werden durch die quergesteckten Verbindungselemente Längs- und Querkräfte spielfrei übertragen. Derartige Schließringbolzen können insbesondere als sog. Huck-Systeme ausgebildet sein.

Das gebolzte bzw. geschraubte Fahrgestell hat ferner den Vorteil, dass dessen Einzelteile, insbesondere die Längs- und Querträger als Standardteile in großen Stückzahlen hergestellt werden können. Dies verbessert die Wirtschaftlichkeit. Außerdem lassen sich diese Teile vorab mit einer hochwirksamen Korrosionsschicht versehen, wobei sie z.B. feuerverzinkt werden. Durch die Verbindungstechnik wird der Korrosionsschutz nicht in Mitleidenschaft gezogen. Dies gilt auch für die evtl. geschweißten Bestandteile eines Zentralrahmens.

Das Fahrgestell eignet sich besonders für Schwerlastfahrzeuge, insbesondere für Tieflader. Dies sind bevorzugt Anhänger, können aber auch Kraftfahrzeuge sein. Der Ladeboden des Fahrzeugs kann unterschiedlichen Erfordernissen angepasst werden. Insbesondere können abgesenkte Radmulden vorhanden sein, welche eine Reduzierung der Fahrzeug- und Aufbauhöhe ermöglichen, was insbesondere bei großen Baufahrzeugen oder anderen Lasten oder Ladungen von Vorteil ist. Die Radmulde und deren tragende Teile können am Zentralrahmen angehängt sein.

Durch eine Kombination von kurzen und langen Querträgern in unterschiedlicher Einbauhöhe kann eine Radmulde an beliebiger Stelle des Fahrgestells und bei Bedarf nachträglich und mit geringem Aufwand angebracht werden. Die Querträger bieten auch besonders gute Aufnahmebedingungen für die hier eingeleiteten Rad- oder Aufbaulasten. Außerdem können Radmulden besonders effizient, insbesondere tief und trotzdem rollgängig für Radbewegungen durch Eigenantrieb gestaltet werden. Hierfür können Muldenwände mit Kletterleisten angebracht und an den unterschiedlich hohen Querträgern abgestützt werden.

Ein Radmulde kann alternativ nur mit kurzen Querträgern an einem Längsträger bzw. am Zentralrahmen befestigt sein. Hierfür ist eine hängende Querträgerbefestigung mit einer Momentenstütze von Vorteil. Diese Konstruktion lässt im Zentralrahmen Platz für Einbaute, z.B. Drucklufttanks oder dgl.. Eine solche Muldenaufhängung hat eine eigenständige erfinderische Bedeutung.

Eine Radmulde kann auch mit einer bei Bedarf ausziehbaren Muldenabdeckung versehen sein. Dies erhöht die Einsatzflexibilität des Fahrzeugs, insbesondere Anhängers, und hat ebenfalls eine eigenständige erfinderische Bedeutung. Eine solche Muldenabdeckung kann auch bei anderen Fahrgestellen, insbesondere Tiefladern mit einem geschweißten Fahrgestell, eingesetzt werden. Sie kann auch für eine Seitenführung eines Fahrzeugrades oder anderen Gegenstands in der Radmulde dienen.

Das innere Rahmenteil mit den vorzugsweise zwei inneren Längsträgern und zumindest einigen inneren Querträgern, welches einen Zentralrahmen bildet, kann für die unterschiedlichsten Bauformen des Fahrgestells gleich bleiben, wobei auch Achsböcke oder andere Fahrgestellteile für die Aufnahme von einer oder mehreren Achsen durch die besagten bolzenartigen Verbindungen lösbar befestigt werden können. Hierbei kann die Zahl und Positionierung der Achsen gewählt und ggf. verändert werden.

Der Zentralrahmen kann zum Teil geschweißt sein. Dies gilt insbesondere für die in den verschiedenen Bauvarianten gleich bleibenden Längs- und Querträger. Andere Querträger, die z.B. je nach Achsenzahl, Ladebodengestaltung oder dgl. variieren, können ohne Schweißen, z.B. durch Schrauben, Bolzen oder dgl. und ggf. mit Distanzplatten in den Zentralrahmen eingebaut werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: ein Fahrzeug in Form eines Tiefladeanhängers in Seitenansicht,
- Figur 2:: ein Fahrgestell in perspektivischer Ansicht,
- Figur 3 und 4:: eine Draufsicht und eine Seitenansicht des Fahrgestells von Figur 2,
- Figur 5:: einen Längsschnitt durch das Fahrgestell gemäß Schnittlinie V-V von Figur 3,
- Figur 6:: einen Längsschnitt durch das Fahrgestell gemäß Schnittlinie VI-VI von Figur 3,
- Figur 7:: eine abgebrochene und vergrößerte Detailansicht des Ausschnitts VII von Figur 5,
- Figur 8:: eine Variante des Fahrgestells in perspektivischer Ansicht,
- Figur 9:: eine vergrößerte und abgebrochene Detailansicht eines Ausschnitts von Figur 8,
- Figur 10 und 11:: eine Draufsicht und Seitenansicht einer Variante des Fahrgestells von Figur 8,
- Figur 12:: eine perspektivische Ansicht einer Sandwichplatte am vorderen Bereich des Fahrgestells,
- Figur 13:: eine Unteransicht der Sandwichplatte von Figur 12,
- Figur 14:: eine perspektivische Ansicht eines geschweißten Zentralrahmens,
- Figur 15:: eine perspektivische Ansicht des Zentralrahmens mit einer Sandwichplatte,
- Figur 16 und 17:: eine Draufsicht und eine geklappte Seitenansicht des Zentralrahmens mit Sandwichplatte von Figur 5,
- Figur 18 und 19:: verschiedene perspektivische Ansichten eines Fahrgestells mit einer Radmulde und einer Radmuldenabdeckung sowie einer anderen Radmuldenaufhängung,
- Figur 20 bis 22:: die Radmuldenabdeckung und Radmuldenaufhängung in einer Seitenansicht, einer Draufsicht und einer geklappten Stirnansicht und
- Figur 23 und 24:: die Radmuldenaufhängung und die Muldenabdeckung in verschiedenen perspektivischen Ansichten.

Die Erfindung betrifft einen Anhänger (1) mit einem Fahrgestell (2), insbesondere einen Deichselanhänger oder einen Sattelauflieger. Ferner ist das Fahrzeug (1) bevorzugt ein Schwerlastfahrzeug mit einem offenen Ladeboden (25). Vorzugsweise handelt es sich hierbei um einen Tiefladeanhänger.

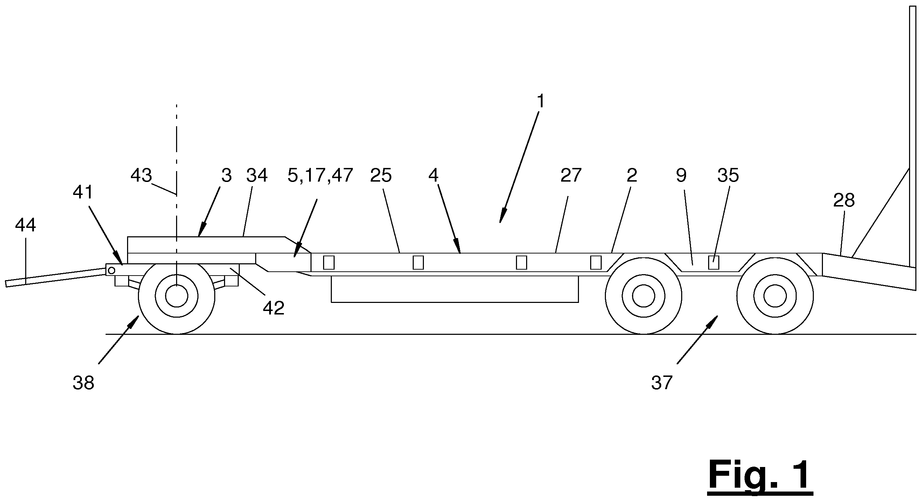

Figur 1 zeigt ein solches Fahrzeug (1) in Form eines Tiefladeanhängers für schwere Lasten, z.B. für den Transport von Baumaschinen. Die nachfolgend erläuterten Merkmale gelten mit entsprechender Anpassung auch für ein anderes Fahrzeug, z.B. ein Kraftfahrzeug.

Der Anhänger (1) weist ein rahmenartiges Fahrgestell oder Chassis (2) auf, welches einteilig oder modular aufgebaut sein kann. Die Modulunterteilung kann in Längsrichtung (58) erfolgen, wobei z.B. zwei Module (3,4), nämlich ein Vorderteil und ein Hinterteil, gebildet werden. Alternativ können drei oder mehr Module vorhanden sein. An der oder den Verbindungsstellen (5) der Module (3,4) kann eine Längsverbindung über eine nachfolgend erläuterte formschlüssig Abstützung (47) erfolgen.

Die Modulunterteilung kann alternativ oder zusätzlich in Querrichtung bestehen, wobei das Fahrgestell (2) in einen in Längsrichtung (58) sich erstreckenden Zentralrahmen (61) und beidseitig angebaute variable Seitenrahmen (62) unterteilt ist.

Das rahmenartige Fahrgestell (2) trägt einen Ladeboden (25), der in der Ausführungsform als Tieflader z.B. eine offene Ladefläche bildet und der unterschiedlich ausgebildet sein kann. Figur 1, 2, 8 und 10 zeigen hierzu verschiedene Varianten.

Der Ladeboden (25) bzw. das Fahrgestell (2) können im vorderen Bereich eine nach oben gerichtete Abkröpfung (17) oder einen sog. Schwanenhals aufweisen. Bei dieser in Figur 1, 2, 8 und 14 dargestellten Ausführungsform gliedert sich der Ladeboden (25) z.B. in einen Tragboden (27) im mittleren bzw. hinteren Fahrgestellbereich, z.B. am Modul (4), der am Heck eine abwärts gerichtete Auffahrschräge oder Heckschräge (28) und eine ggf. dort angelenkte Auffahrrampe aufweisen kann. Der Tragboden (27) kann ansonsten eben sein und eine breite Standfläche für schwere Lasten, insbesondere Baufahrzeuge oder dgl., bieten. Am Fahrgestell (2) können auch ein oder mehrere seitliche Ausleger (35) angeordnet sein, die eine Verbreiterung des Tragbodens (27) ermöglichen. Am vorderen Fahrgestellbereich bzw. am Frontmodul (3) kann ein Ablageboden (34) angeordnet sein, der z.B. zur Ablage einer Baggerschaufel oder dgl. dienen kann und der durch die Abkröpfung (17) etwas höher liegt als der Tragboden (27). Über die Abkröpfung (17) kann außerdem die Bodenfreiheit des vorderen Fahrgestellbereichs oder Moduls (3) vergrößert werden.

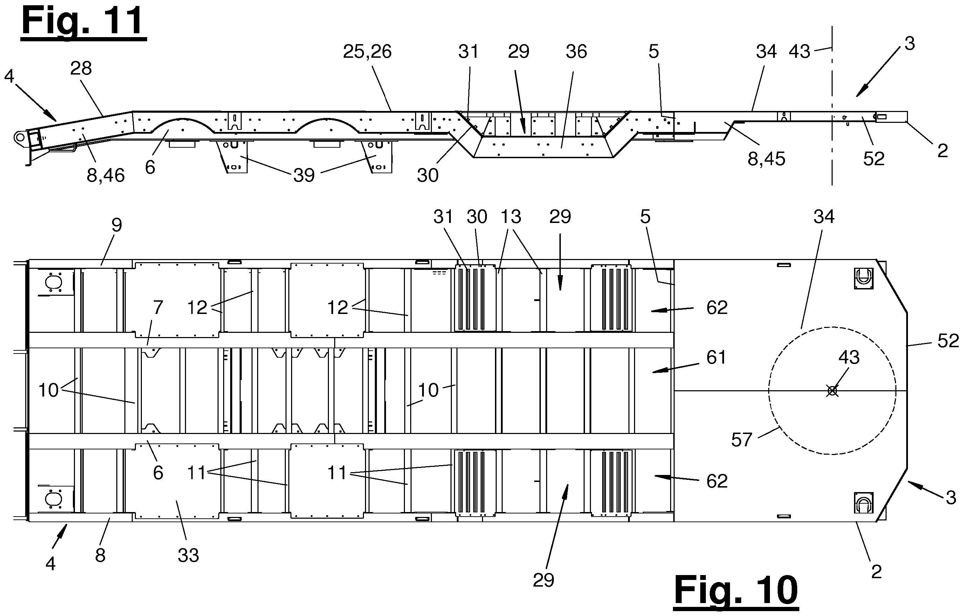

Bei der in Figur 10 bis 13 dargestellten Ausführungsform kann der Ladeboden (25) als über die Länge durchgehend ebene Plattform (26) ausgebildet sein, die sich auch über den Frontbereich bzw. das Frontmodul (3) erstreckt. Am Heck kann ggf. eine Heckschräge (28) vorhanden sein.

Der Ladeboden (25) kann ferner eine oder mehrere Radmulden (29) zur Achsabsenkung eines aufgeladenen Fahrzeugs, z.B. eines Radladers, aufweisen. Das beladene Fahrzeug (1) kann dadurch die geltenden Höhenbeschränkungen einhalten. Derartige Radmulden (29) können an einem Tragboden (27) oder auch an einer Plattform (26) angeordnet sein. Daneben sind weitere beliebige Ausgestaltungen der Form, Anordnung und Gliederung des Ladebodens (25) möglich.

Am Fahrgestell (2) ist mindestens eine Achse oder Achsgruppe (37) angeordnet, die sich im Heckbereich befindet. Die Achsgruppe (37) kann eine, zwei, drei oder mehr Achsen mit einer Aufhängung und einer Federung, insbesondere einer Luftfederung, aufweisen.

Am vorderen Teil des Fahrgestells (2) ist eine Zugeinrichtung (41) angeordnet. Diese kann ggf. eine weitere Achse oder Achsgruppe (38) aufweisen. Die Zugeinrichtung (41) ist in der gezeigten Ausführungsform von Figur 1 als Deichseleinrichtung ausgebildet und weist einen unter dem vorderen Fahrzeugbereich oder dem Frontmodul (3) angebauten Drehschemel (42) mit einer vertikalen Drehachse (43) und einer Anhängevorrichtung (44), z.B. einer schwenkbaren Deichsel, auf. Die Achsgruppe (38) ist am Drehschemel (42) federnd gelagert und kann z.B. eine oder zwei Achsen umfassen.

In Abwandlung der gezeigten Ausführungsform kann die Zugeinrichtung (41) als Satteleinrichtung ausgebildet sein. In diesem Fall ist unter dem vorderen Fahrgestellbereich bzw. dem Frontmodul (3) eine Auflageplatte oder eine Scheuerplatte sowie ein Königszapfen angeordnet. Um den Königszapfen und die hier durchgehende Drehachse (43) kann der Sattelauflieger schwenken.

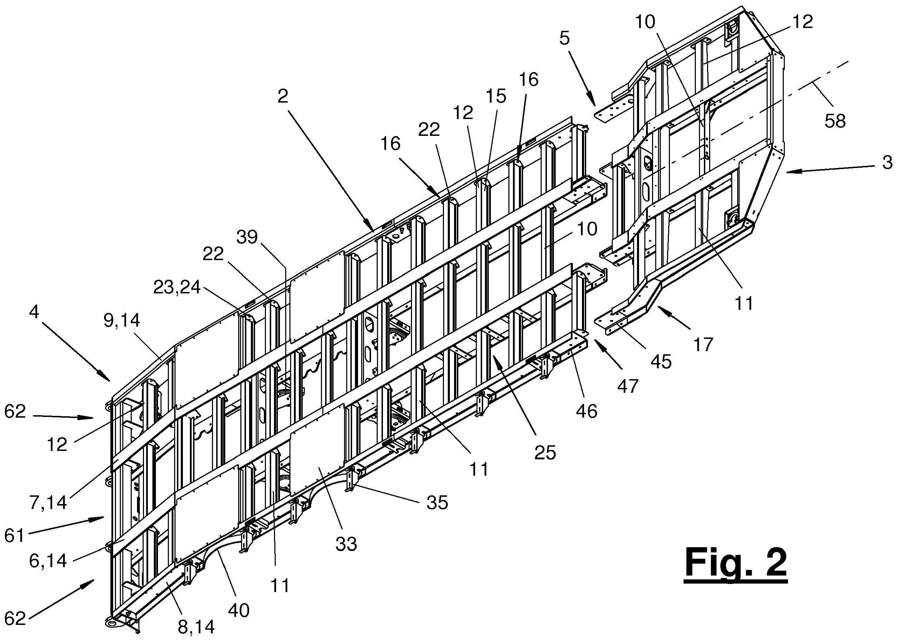

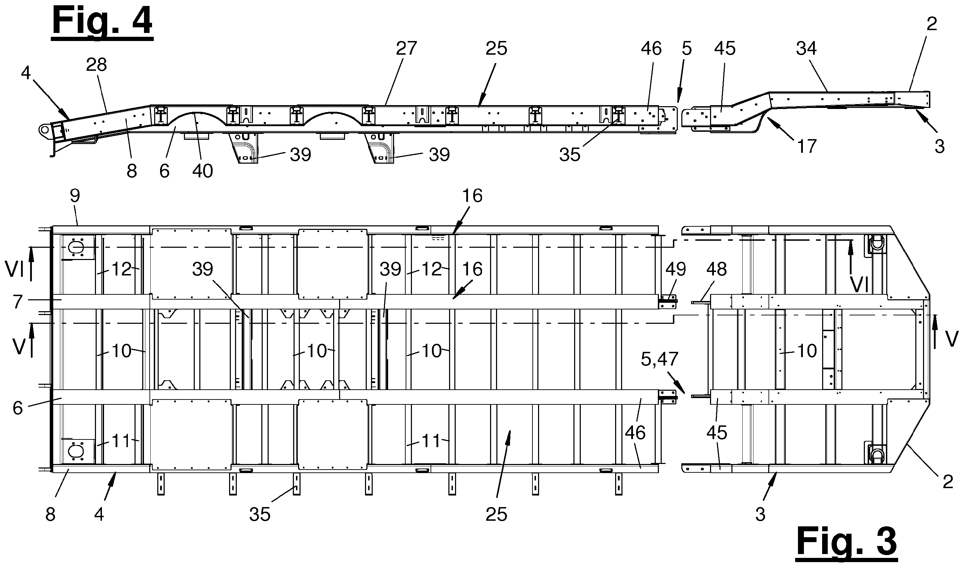

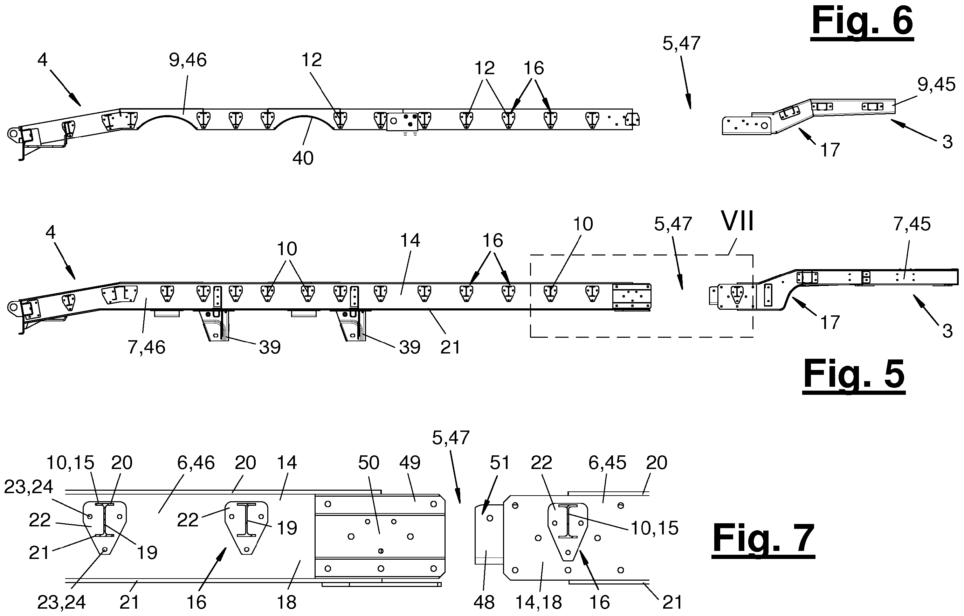

Figur 2 zeigt eine erste Variante des Fahrgestells (2) in perspektivischer Ansicht. Figur 3 und 4 zeigen die zugehörige Draufsicht und Seitenansicht. In Figur 5, 6 und 7 sind Längsschnitte und Ausschnitte dargestellt.

Das Fahrgestell (2) ist rahmenartig ausgebildet und besteht aus mehreren Längsträgern (6,7,8,9) und mehreren Querträgern (10,11,12), die untereinander ggf. lösbar verbunden sind. Die Längs- und Querträger (6 - 13) bestehen aus Metall, vorzugsweise aus Stahl, und haben eine Korrosionsschutzschicht, insbesondere eine Feuerverzinkung.

Das Fahrgestell (2) kann einen Zentralrahmen (61) aufweisen, der aus zwei oder mehr inneren oder mittleren Längsträgern (6,7) und dazwischen angeordneten kurzen Querträgern (10) besteht, die nur über einen Teil der Fahrzeugbreite reichen. Dieser Zentralrahmen kann für unterschiedliche Ausführungsformen von Fahrgestellen (2) und Fahrzeugen (1) gleich bleiben.

Das Fahrgestell (2) weist ferner zwei Seitenrahmen (62) auf, die jeweils aus einem außenliegenden Längsträger (8,9) und weiteren kurzen Querträgern (11,12) bestehen, durch die die äußeren Längsträger (8,9) mit den benachbarten inneren Längsträgern (6,7) verbunden sind. Die Seitenrahmen (62) können variabel sein. Sie können insbesondere abnehmbar und veränderlich sein, wobei die Rahmenteile vorzugsweise geschraubt oder gebolzt sind.

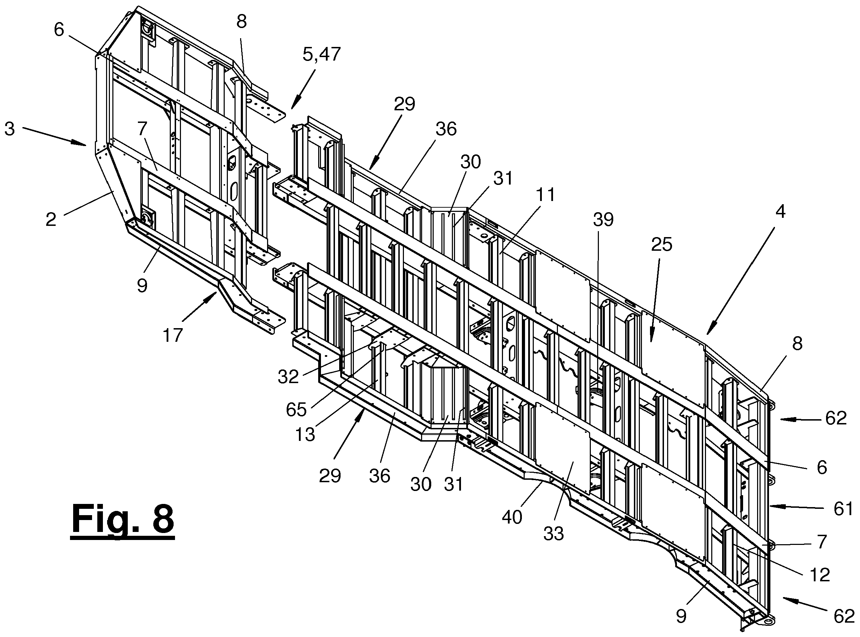

In der nachfolgend erläuterten Ausführungsform von Figur 8 bis 11 können auch noch lange Querträger (13) vorhanden sein, die mit den äußeren Längsträgern (8,9) verbunden sind. An den äußeren Längsträgern (8,9) können außerdem Ausleger (35) starr oder beweglich, insbesondere schwenkbar, befestigt sein.

Der in Figur 2 gezeigte gitterartige oder leiterartige Rahmen des Fahrgestells (2) kann in der Länge unterteilt sein. Hierdurch können die vorerwähnten Module (3,4) mit den formschlüssigen Abstützungen (47) entstehen, die insbesondere an den inneren Längsträgern (6,7) angeordnet sind. Diese werden nachfolgend im einzelnen erläutert.

In den gezeigten Ausführungsformen haben die Fahrgestelle oder Rahmen (2) vier Längsträger (6,7,8,9) und eine Vielzahl von kurzen Querträgern (10,11,12,75) sowie ggf. einen oder mehrere lange Querträger (13). Die kurzen Querträger (10,11,12,75) erstrecken sich zwischen den jeweils unmittelbar benachbarten Längsträgern (6,7,8,9) und sind an ihren Enden mit diesen Längsträgern (6,7,8,9) verbunden. In Abwandlung der gezeigten Ausführungsformen kann die Zahl der Längsträger (6,7,8,9) variieren, wobei z.B. in einer Dreierformation ein zentraler Längsträger und zwei parallele äußere Längsträger vorhanden sind. Die Längsträgerzahl kann auch fünf oder mehr betragen.

Die Zahl und Anordnung der kurzen und ggf. langen Querträger (10,11,12,13,75) ist variabel und kann nach Bedarf gewählt werden. Das Fahrgestell (2) ist als Baukastensystem ausgebildet, welches durch die ggf. lösbare Trägerverbindung verschiedene Längs- und Querträgerkonfigurationen und eine Anpassung unterschiedliche Nutz- und Lasterfordernisse ermöglicht. Desgleichen kann auch die Zugeinrichtung (41) variabel sein. Innerhalb des Baukastensystems können einzelne Komponenten gleich bleiben und in entsprechend großer Zahl vorhanden sein. Dies können insbesondere die in den Ausführungsbeispielen gezeigten zwei oder mehr inneren Längsträger (6,7) und die dazwischen angeordneten kurzen Querträger (10) sein. Sie bilden den Zentralrahmen (61) und das Rückgrat des Fahrgestells (2) und Fahrzeugs (1) und tragen auch die in Figur 4 und 5 dargestellten Achsböcke (39).

Die Verbindung zwischen den Längs- und Querträgern (6,7,8,9,10,11,12,13) kommt vorzugsweise ohne Wärmeeintrag und damit ohne Verzugsgefahr aus. Die Querträger (10,11,12,13) sind mit den Längsträgern (6,7,8,9) stumpf gestoßen und durch bolzenartige Verbindungselemente (24) verbunden. Der stumpfe Stoß kann unmittelbar sein, wobei sich die Träger 6,7,8,9,10,11,12,13) berühren. Er kann auch mittelbar über ein eingefügtes Distanzelement, z.B. eine Distanzplatte sein. Die Verbindungselemente (24) können Schraubbolzen, Niete oder dgl. aufweisen. Sie können für eine lösbare oder unlösbare Verbindung sorgen. In der gezeigten und bevorzugten Ausführungsform handelt es sich um Schließringbolzen, die mit einem Kopf und einem Gewinde versehen sind und die beim Schraubenanzug gespannt und gequetscht werden, wobei sie Durchgangsöffnungen (23) in den Längs- und Querträgern (6,7,8,9,10,11,12,13) dicht ausfüllen und mit ihrem Bolzenschaft an den Öffnungsrändern zur spielfreien Kraftübertragung anliegen. Derartige Schließringbolzen können für Reparaturen, Umbauten oder dgl. gelöst und gewechselt werden.

Figur 7 verdeutlicht exemplarisch die Ausbildung der Anschlussstellen (16) zwischen Längs- und Querträgern (6,7,8,9,10,11,12,13). Die Längsträger (6,7,8,9) weisen ein Trägerprofil (14) auf, welches zumindest einen aufrechten Steg (18) mit einem Obergurt (20) und einem Untergurt (21) aufweist. Die Profilform kann im Querschnitt unterschiedlich ausgebildet sein. Die inneren Längsprofile (6,7) haben z.B. im Querschnitt eine I-Form. Die äußeren Längsträger (8,9) haben z.B. im Querschnitt eine nach außen offene C-Form. In Abwandlung hierzu sind Querschnitte in Z-Form, L-Form oder dgl. möglich.

Die Querträger (10,11,12,13) weisen ebenfalls ein Trägerprofil (15) auf. Dieses ist in den gezeigten Ausführungsbeispielen im Querschnitt I-förmig und weist einen aufrechten mittleren Steg (19) und einen Ober- und Untergurt (20,21) auf. Die Querträger (10,11,12,13) können an mindestens einem Ende, vorzugsweise an beiden Enden der Trägerprofile (15) jeweils eine Querplatte (22) haben, die eine ebene oder ggf. profilierte Anlagefläche zur Abstützung und Befestigung an einem entsprechend geformten Steg (18) eines Längsträgers (6,7,8,9) bietet und mehrere Durchgangsöffnungen (23) aufweist. Zwischen dem Querträgerende und der ggf. vorhandenen Querplatte (22) und dem Mittelsteg (18) kann ggf. eine Distanzplatte eingefügt sein. Die Querplatte (22) kann in beliebiger Weise am Querträgerende befestigt sein, z.B. durch Schweißen. Sie kann alternativ als Querflansch ausgebildet sein und z.B. von einer Abkantung des Trägerprofils (15) gebildet werden. Die Querplatte (22) ist größer als die Querschnittfläche des Trägerprofils (15) und hat z.B. die in Figur 7 gezeigte Form mit einem im wesentlichen rechteckigen oberen Bereich und einem nach unten zu beidseitig verjüngten unteren Bereich, wobei an dem oberen Bereich beidseits des Stegs (19) zwei Durchgangsöffnungen (23) vorhanden sind. Eine dritte zentrale Durchgangsöffnung befindet sich im unteren Bereich fluchtend unter dem Trägerprofil (15).

Die Stege (18) der Trägerprofile (14) haben Durchgangsöffnungen (23) in entsprechender Zahl und Anordnung. Hierdurch ist es möglich, an einer oder an beiden Längsträgerseiten einen Querträger (10,11,12,13) anzubauen. Bei einem beidseitigen Anbau können die Verbindungselemente (24) durch den Steg (18) und beide Querplatten (22) durchgesteckt werden.

Dabei kann an den Längsträgern (6,7,8,9) eine Vielzahl bzw. Überzahl von Durchgangsöffnungen (23) in einer Anordnung als Anpassungsraster vorhanden sein, welcher verschiedene und bedarfsweise zu nutzende Anbaustellen bietet und auch spätere Umrüstungen oder Umbauten ermöglicht.

Figur 2 verdeutlicht einen solchen Rahmenaufbau mit fluchtend angeordneten zentralen Querträgern (10) und äußeren Querträgern (11,12). Im Achsbereich können abweichend hiervon nur zentrale Querträger (10) zwischen den inneren Längsträgern (6,7) angeordnet sein. Fluchtende Querträgeranordnungen können auch an der Verbindungsstelle (5) vorhanden sein, wobei die bolzenartigen Verbindungselemente (24) sowohl die Längsträger (6,7 und 8,9), wie auch die Querträger (10,11,12) miteinander verbinden.

Figur 6 zeigt die Anschlussstellen (16) an einem äußeren Längsträger (9) gemäß einem Schnitt VI-VI von Figur 3. Figur 5 zeigt gleichartige Anschlussstellen (16) an einem inneren Längsträger (7). Figur 5 zeigt außerdem die Montage von Achsböcken (39) an der Unterseite des oder der zentralen Längsträger (6,7), wobei auch hier eine vorzugsweise lösbare bolzenartige Verbindung, insbesondere eine Schraubverbindung, vorhanden ist. Die Achsböcke (39) sind z.B. mit einer oberen Montageplatte am Untergurt (21) der Trägerprofile (14) befestigt.

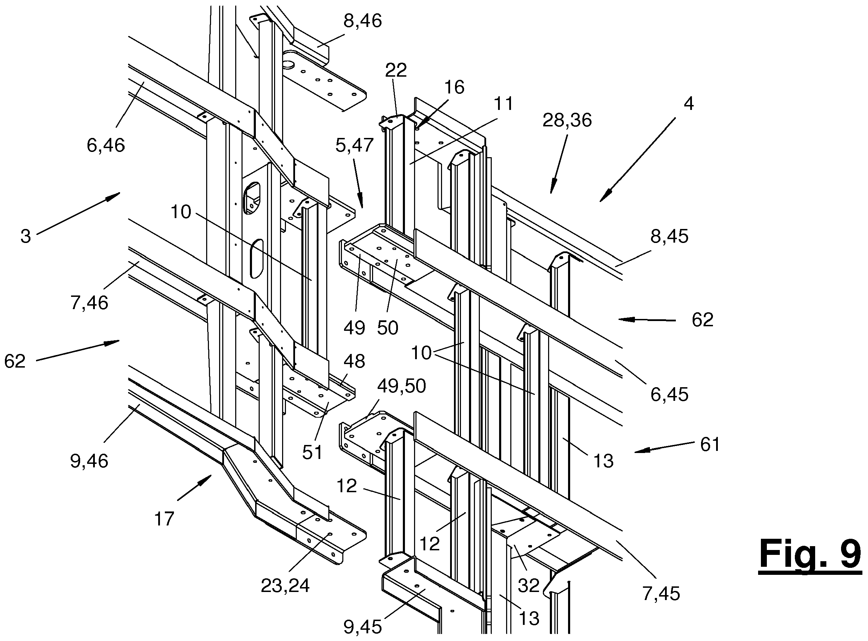

Figur 2 zeigt die Axialverbindung der Module (3,4) über die in vordere Trägerteile (45) und hintere Trägerteile (46) unterteilten Längsträger (6,7,8,9). In Figur 7 ist hierzu ein vergrößerter Ausschnitt von Figur 5 dargestellt. Aus Figur 9 sind ebenfalls Details erkennbar. In der gezeigten Ausführungsform haben die inneren Längsträger (6,7) an der Verbindungsstelle (5) die besagte formschlüssige Abstützung (47). Diese besteht aus einer oder mehreren Gruppen von ineinander greifenden Stützplatten oder Scherplatten (48,49), die an den vorderen Trägerteilen (45) und den hinteren Trägerteilen (46) des Längsträgers (6,7) angeordnet sind. Die gepaarten Stützplatten (48,49) weisen hierbei formschlüssig ineinander greifende Vorsprünge (50) und Vertiefungen (51) auf. Die Vorsprünge (50) können z.B. als längs der Achse (58) ausgerichtete Leisten ausgebildet sein, wobei die ebenfalls axial ausgerichteten Vertiefungen (51) als längliche Nut ausgebildet sind. Die Vorsprünge (50) und die Vertiefungen (51) können konische Seitenwände im Kontaktbereich und einen Spannsitz aufweisen. In den gezeigten Ausführungsformen tragen z.B. die Stützplatten (49) an den hinteren Trägerteilen (46) die Vorsprünge (50) und die anderen Scherplatten (48) die Vertiefungen (51). Zur Montage können die Leisten (50) und die Nuten (51) axial übereinander geschoben und mittels der quer durchgesteckten bolzenartigen Verbindungselemente (24) in Axialrichtung (58) fixiert und in Querrichtung zusammengespannt werden.

Bei den äußeren Längsträgern (8,9) sind andere Verbindungsmöglichkeiten, z.B. durch eine L-förmige Verbindungsmanschette gegeben, die beide Trägerenden (45,46) an der Verbindungsstelle (5) umgreift und an diesen mit bolzenartigen Verbindungselementen (24) der genannten Art befestigt ist.

Die Längsträger (6,7,8,9) können außerdem an anderen Stellen noch in der Länge unterteilt und durch eine formschlüssige Abstützung (47), durch Verbindungsmanschetten oder dgl. verbunden sein. Eine solche Unterteilung ist z.B. für den Anschluss der Heckschräge (28) möglich. Gemäß Figur 6 können z.B. auch die äußeren Längsträger (8) in ihrer Länge unterteilt und mit Verbindungsmanschetten aneinander fixiert sein. Trägerteile können dadurch an unterschiedliche Achsanordnungen im Sinne des Baukastensystems angepasst werden und hierfür z.B. an der Unterseite eine oder mehrere Radauschnitte (40) tragen. Auch im vorderen Fahrgestellbereich sind z.B. an der Abkröpfung (17) Unterteilungen der Längsträger (6,7,8,9) möglich.

Wie Figur 2 verdeutlicht, können an der Front und am Heck des Fahrgestells (2) andere Arten von Querträgern zur Bildung des Front- und Heckabschlusses vorhanden sein. Diese können ebenfalls mittels bolzenartiger Verbindungselemente (24) angebaut sein.

Zur Bildung der Ladefläche (25) können auf den zentralen und äußeren Querträgern (10,11,12) plattenartige oder bohlenartige Abdeckungen aufgelegt sein. Die Querträger (10,11,12) sind hierzu gegenüber den Obergurten (20) der Längsträger (6,7,8,9) abgesenkt. Im Bereich der Fahrzeugräder können einzelne verstärkte Abdeckungen (33), z.B. Stahlplatten, vorhanden sein. Auch am vorderen Fahrgestellbereich oder Frontmodul (3) können entsprechende plattenförmige Abdeckungen vorhanden sein.

Figur 8 zeigt eine Variante des Fahrgestells (2) von Figur 2, die ebenfalls für eine doppelte Hinterachse und einen Schwanenhals (17) ausgebildet ist. Das Fahrgestell (2) weist im Beispiel von Figur 8 zwei seitliche abgesenkte Bereiche an den Seitenrahmen (62) auf, die beidseits von dem z.B. ohne Höhenänderung durchgehenden Zentralrahmen (61) angeordnet sind und die z.B. vertiefte Radmulden (29) bilden. Im Bereich der Senkstellen oder Radmulden (29) weisen die äußeren Längsträger (8,9) eine wannenartige Absenkung (36) auf. Im Muldenbereich sind außerdem in der Variante von Figur 8 bis 11 ein oder mehrere lange Querträger (13) angeordnet, die mit ihren Enden stumpf an die äußeren Längsträger (8,9) im Absenkungsbereich anstoßen und hier mittels Querplatten (22) und bolzenartigen Verbindungselementen (24) befestigt sind. Die langen Querträger (13) können ebenfalls im Querschnitt eine I-Form gemäß Figur 7 aufweisen. Sie können unterhalb der inneren Längsträger (6,7) verlaufen und an diesen hängend mittels Tragflanschen (32) abgestützt sein. Die Tragflansche (32) sind am oberen Ende an den Stegen (18) der inneren Längsträger (6,7) befestigt und weisen am unteren Ende eine an die Querträgerkontur angepasste Flanschöffnung (65) auf. Die langen Querträger (13) ragen durch die Flanschöffnung (65) und sind hier abgestützt.

Wie Figur 8 und 9 verdeutlichen, können im Senk- oder Radmuldenbereich mehrere, z.B. drei lange Querträger (13) vorhanden sein, die tiefer als die axial benachbarten kurzen Längsträger (10,11,12) angeordnet sind und die den Muldenboden bilden. Am Muldenrand können schräge Muldenwände (30) in Plattenform mit einer oder mehreren quer liegenden Kletterleisten (31) angeordnet und jeweils randseitig an einem unteren langen Querträger (13) und an oberen kurzen Querträgern (11,12) befestigt sein.

In der Ausführungsform von Figur 8 und 9 haben das Fahrgestell (2) und der Ladeboden (25) eine Abkröpfung (17). Durch diesen Schwanenhals (17) kann der vordere Fahrgestellbereich bzw. das Frontmodul (3) eine fortgesetzte Gitterrahmenstruktur und eine entsprechende Bauhöhe haben, um die ausreichende Bodenfreiheit für die Zugeinrichtung (41) herzustellen.

In Figur 10 bis 13 ist eine weitere Variante eines Fahrgestells (2) dargestellt, bei der der Ladeboden (25) als oberflächig durchgehende ebene Plattform (26) ausgebildet ist, die sich bis zum Frontende des Fahrgestells (2) erstreckt. Das hintere Modul (4) kann ansonsten die gleiche Ausbildung wie bei Figur 8 aufweisen. Das Frontmodul (3) bzw. der vordere Fahrgestellbereich weist in dieser Ausführungsform eine niedrig bauende Sandwichplatte (52) auf. Diese besteht aus einer oberen Platte (53) und einer unteren Platte (54), die beide aus Stahl bestehen und z.B. eine Dicke von 6 bis 8 mm aufweisen. Zwischen die Platten (53,54) sind im Innenbereich stützende Stege oder Streben (55) eingebaut und an den Platten (53,54) starr oder lösbar befestigt, wobei zwischen den Platten (53,54) ein Hohlraum (56) gebildet wird. Die Seitenränder der Sandwichplatte (52) können von im Frontbereich in der Höhe geminderten äußeren Längsprofilen (8,9) und einem frontseitigen Querprofil gebildet werden. Die inneren Längsprofile (6,7) können vor der Sandwichplatte (52) enden, wobei in diesem Übergangsbereich ebenfalls Abdeckungen vorhanden sind.

Die Sandwichplatte (52) bildet mit ihrer oberen Platte (53) einen Bestandteil der Plattform (26) und weist zur Erzielung einer ausreichenden Bodenfreiheit eine geringe Dicke von z.B. ca. 120 mm auf. Die Dicke kann je nach Erfordernis auch etwas schwanken, z.B. in einem Bereich zwischen 110 und 130 mm, wobei die Plattendicken und die Steghöhen entsprechend angepasst werden können.

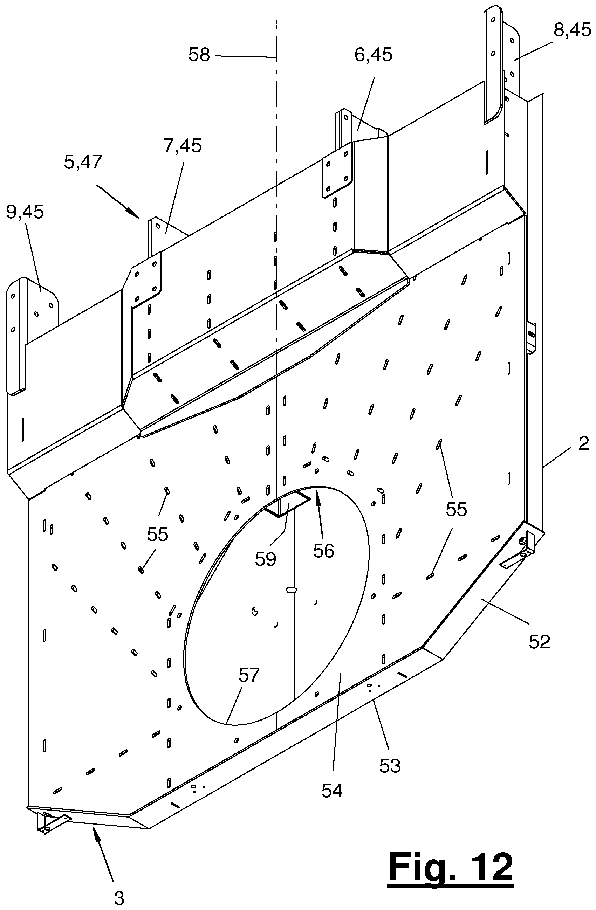

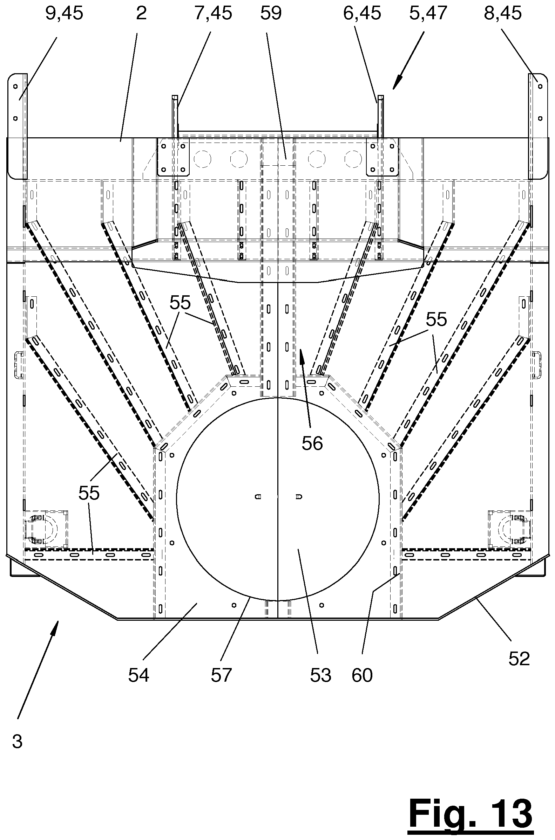

Wie Figur 12 und 13 verdeutlichen, kann die untere Platte (54) einen Ausschnitt (57) aufweisen, der z.B. kreisrund, oval oder prismatisch ist und der bevorzugt im Bereich, insbesondere konzentrisch zu der Drehachse (43) der Zugeinrichtung (41) angeordnet ist. Der Drehkranz des Drehschemels (nicht dargestellt) kann außenseitig um den Ausschnitt (57) herum angeordnet und an der unteren Platte (54) befestigt werden. Durch den Ausschnitt (57) können Leitungen, insbesondere Versorgungsleitungen für Strom, Druckluft, Hydraulikflüssigkeit, Kühlmittel oder dgl. Medien vom Drehschemel in den Hohlraum (56) geführt und von dort weiter im Fahrzeug (1) und im Fahrgestell (2) verteilt werden. An den Ausschnitt (57) kann sich hierfür z.B. auch der in Figur 12 und 13 dargestellte Kanal (59) zur Leitungsführung anschließen.

Gemäß Figur 13 können die Stützstege (55) zu einem großen Teil entlang oder schräg zur Längsachse (58) des Fahrzeugs (1) ausgerichtet sein. Sie münden am Rand des Ausschnitts (57) und können hier an einen im wesentlichen U-förmigen Stützrahmen (60) angebunden sein, welcher den Ausschnitt (57) umgibt. Außerdem können im Frontbereich quer liegende Stützstreben (55) vorhanden sein. Über die axialen oder schrägen Stützstreben (55) können die von der Zugeinrichtung (41) eingeleiteten Fahrkräfte, insbesondere die axialen Zug- und Druckkräfte, in die anschließenden Fahrgestellbereiche eingeleitet und dabei über die Fahrgestellbreite verteilt werden.

Die Ausbildung der Sandwichplatte (52) kann auch bei anderen Fahrzeugen (1), insbesondere Tiefladeanhängern, Verwendung finden, die in konventioneller Weise als Schweißkonstruktionen oder dgl. ausgebildet sind. Durch die auch für hohe Lastabstützungen geeignete Sandwichplatte (52) können durchgehende Plattformen (26) realisiert werden, was z.B. auch bei vorbekannten Tiefladeanhängern, z.B. entsprechend der DE 201 21 479 U1 möglich ist.

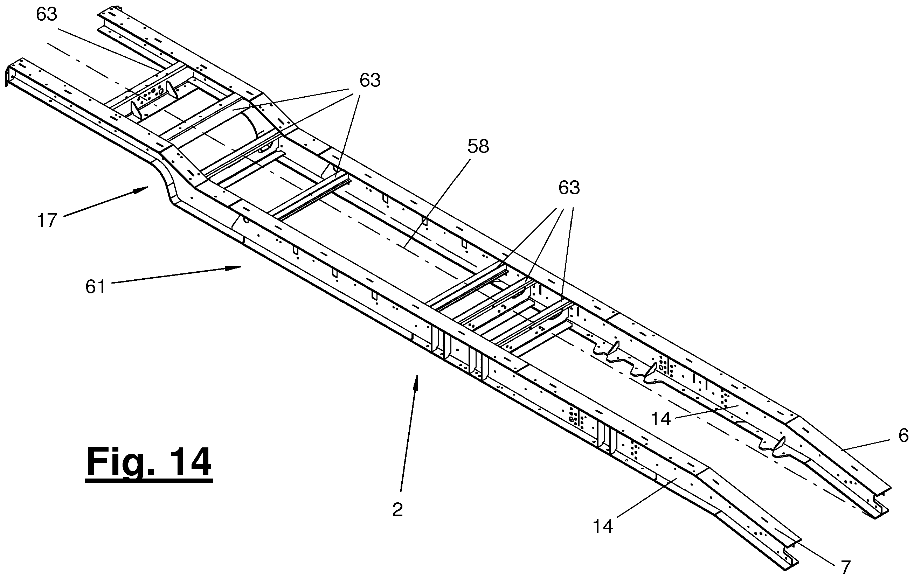

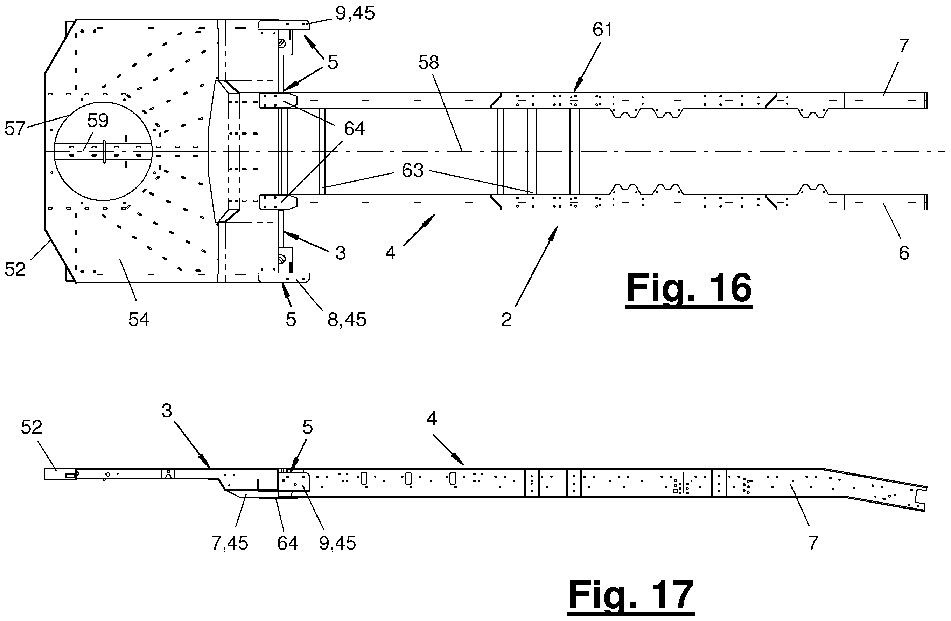

Figur 14 bis 17 zeigen eine weitere Variante des Fahrgestells (2) mit einem Zentralrahmen (61), der als zumindest teilweise geschweißte Konstruktion ausgebildet ist. Wie Figur 14 verdeutlicht, weist der Zentralrahmen (61) mehrere Querträger (63) auf, die zwischen den Längsträgern (6,7) angeordnet und dort verschweißt sind. Die Querträger (63) stoßen stumpf an die Mittelstege (18) der Längsträger (6,7) an und sind hier durch Schweißnähte verbunden. Die geschweißten Querträger (63) befinden sich zum einen im mittleren Bereich der Längsträger (6,7), der in Fahrtrichtung vor der Achsgruppe angeordnet ist. Weitere Querträger (63) befinden sich im vorderen Chassisbereich und sind z.B. an der Kröpfung (17) und im Bereich der Zugeinrichtung (41) angeordnet.

Der gezeigte Zentralrahmen (61) ist für verschiedene Bauvarianten des Anhängers (1) gleich. Er kann mit weiteren inneren Querträgern (10) der vorbeschriebenen Art mit Schraub- oder Bolzenverbindungen ergänzt werden, wobei die Zahl und Anordnung dieser weiteren Querträger (10) sich nach den verschiedenen Varianten des Anhängers (1) richten kann, insbesondere auch nach verschiedenen Achsanordnungen. Diese geschraubten oder gebolzten Querträger (10) können ggf. unter Einbau von Distanzscheiben zwischen den Querträgerstirnseiten und den Längsträgern (6,7) montiert werden. Die Ausbildung und Befestigung der Querträger (10) kann ansonsten die gleiche wie in den vorbeschriebenen Ausführungsbeispielen sein.

Der Zentralrahmen (61) von Figur 14 kann im Frontbereich einen Ablageboden (34) oder eine Sandwichplatte (52) der vorbeschriebenen Art gemäß Figur 11 bis 13 tragen. Die Sandwichplatte (52) weist eine obere und eine untere Platte (53,54) sowie an der Unterseite einen Ausschnitt (57) zur Aufnahme der Zugeinrichtung (41) in einer der vorbeschriebenen Ausführungsformen auf. Die Sandwichplatte (52) kann auch den vorbeschriebenen Kanal (59) aufweisen. Sie kann ferner vordere Trägerteile (45) zum Anschluss von äußeren Längsträgern (8,9) besitzen.

Der z.T. geschweißte Zentralrahmen (61) kann in der Ausführungsform von Figur 14 in einem Teil durchgehend ausgebildet sein. Beidseits können Seitenrahmen (62) der vorbeschriebenen Art angebaut werden, wobei der Ladeboden (25) gemäß der vorbeschriebenen Ausführungsbeispiele als ebene Plattform ausgebildet sein kann oder eine andere Gestaltung hat, wobei er z.B. seitliche Radmulden (29) aufweist. Bei dieser Ausführungsform ist eine Modulunterteilung nur in Querrichtung über die Seitenrahmen (62) gegeben.

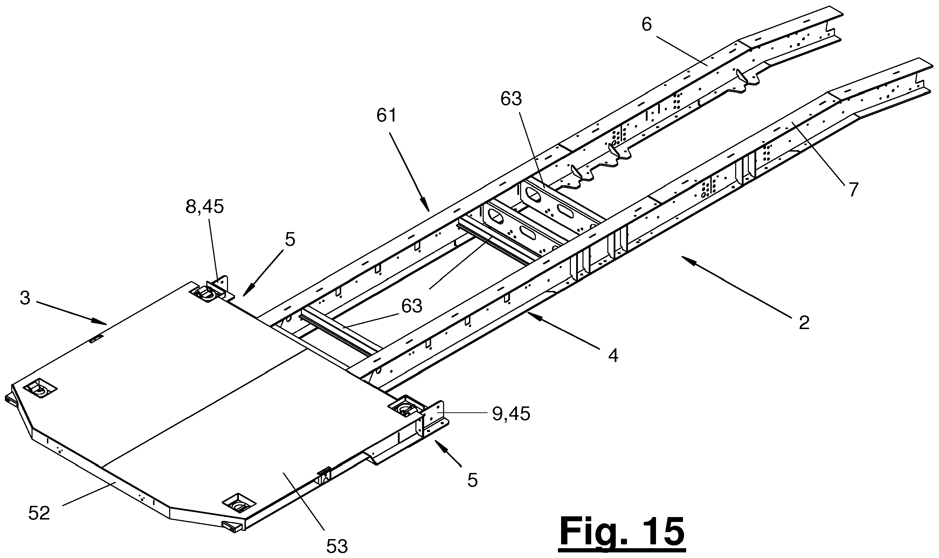

In einer weiteren Variante, die in Figur 15 bis 17 dargestellt ist, kann der zumindest z.T. geschweißte Zentralrahmen (61) auch in Längsrichtung in Module (3,4) unterteilt sein, wobei die Verbindungsstelle (5) sich nahe der Kröpfung (17) befindet. Die Verbindung kann die gleiche wie in den vorbeschriebenen Ausführungsbeispielen mit Stützplatten (48,49) sein. Sie kann in der gezeigten Ausführung von Figur 15 bis 17 von seitlich aneinander liegenden und miteinander verschraubten oder verbolzten Mittelstegen (18) sowie von unteren und/oder oberen Verbindungsplatten (64) gebildet werden, die quer zu den Mittelstegen (18) ausgerichtet sind und die Verbindungsstelle (5) stützend überbrücken.

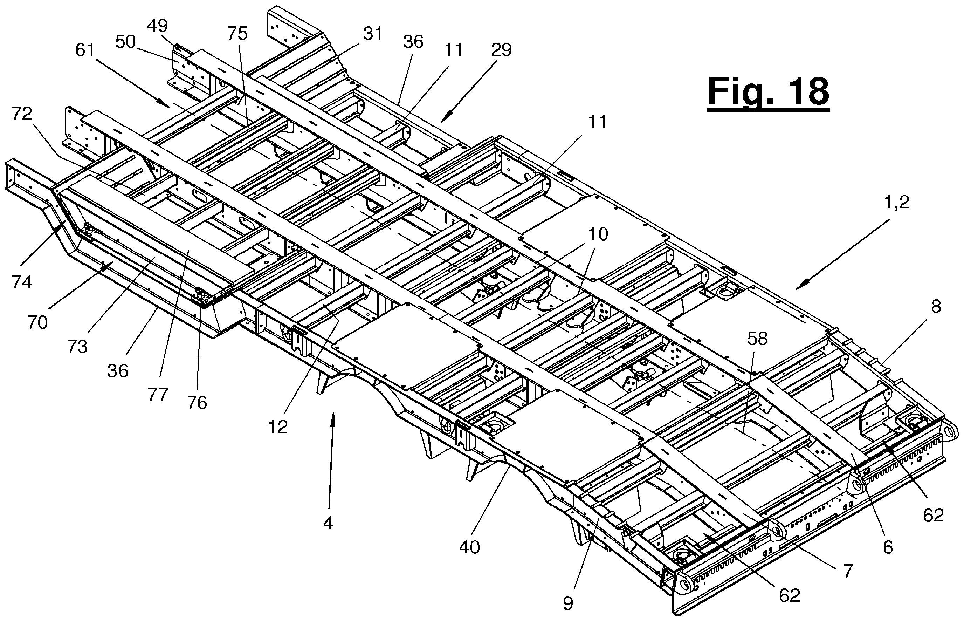

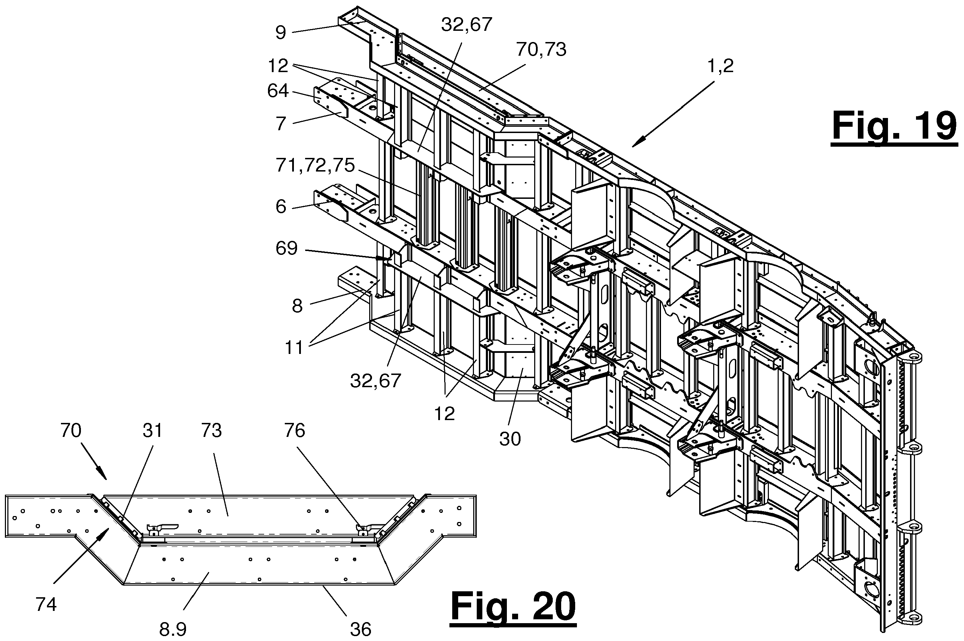

Figur 18 bis 24 zeigen eine Variante der Ausbildung und Aufhängung der Radmulde (29), die eigenständigen erfinderische Bedeutung hat und die auch bei anderen Ausbildungen von Fahrgestellen (2) und Fahrzeugen (1) eingesetzt werden kann. Figur 18 bis 24 zeigen ferner eine Muldenabdeckung (70) für eine Radmulde (29), die ebenfalls eigenständigen erfinderischen Charakter hat und die bei anderen Fahrgestellen (2) und Fahrzeugen (1) Verwendung finden kann, insbesondere bei Tiefladern entsprechend der DE 201 21 479 U1 mit einem geschweißten Fahrgestell bzw. Hauptrahmen.

Bei dem in Figur 18 bis 24 gezeigten Fahrgestell (2) wird auf die im Beispiel von Figur 8 bis 11 gezeigten langen Querträger (13) verzichtet. Alternativ kann die Zahl dieser langen Querträger (13) verringert werden. Hierdurch wird ein Freiraum unterhalb der Längsträger (6,7) und des Zentralrahmens (61) im Bereich zwischen den beidseitigen Radmulden (29) geschaffen, in dem Fahrzeugteile, z.B. Druckluftbehälter, Ventile oder dgl. eingebaut werden können. Der Zentralrahmen (61) kann als teilweise Schweißkonstruktion oder als komplett geschraubte oder gebolzte Konstruktion ausgeführt sein.

In dem Ausführungsbeispiel von Figur 18 bis 24 werden die bisherigen langen Querträger (13) ersetzt durch beidseitige kurze Querträger (11,12), die in hängender Lage unterhalb der Längsträger (6,7) durch einen Tragflansch (32) und eine Momentenstütze (69) befestigt werden. Sie ragen nicht oder nur unwesentlich in den Raum zwischen den Längsträgern (6,7). Im Radmuldenbereich sind zwischen den Längsträgern (6,7) innere Querträger (75) befestigt, welche die Längsträger (6,7) gegenseitig aussteifen und eine Zusatzfunktion für die nachfolgend beschriebene Muldenabdeckung (70) haben können. Die Querträger (75) können direkt oder mittelbar über die Tragplatte (67) mit den Längsträgern (6,7) verbunden sein.

Die Verbindung mit einer Querplatte (22) und Verbindungselementen kann die gleiche wie bei den inneren Querträgern (10) sein.

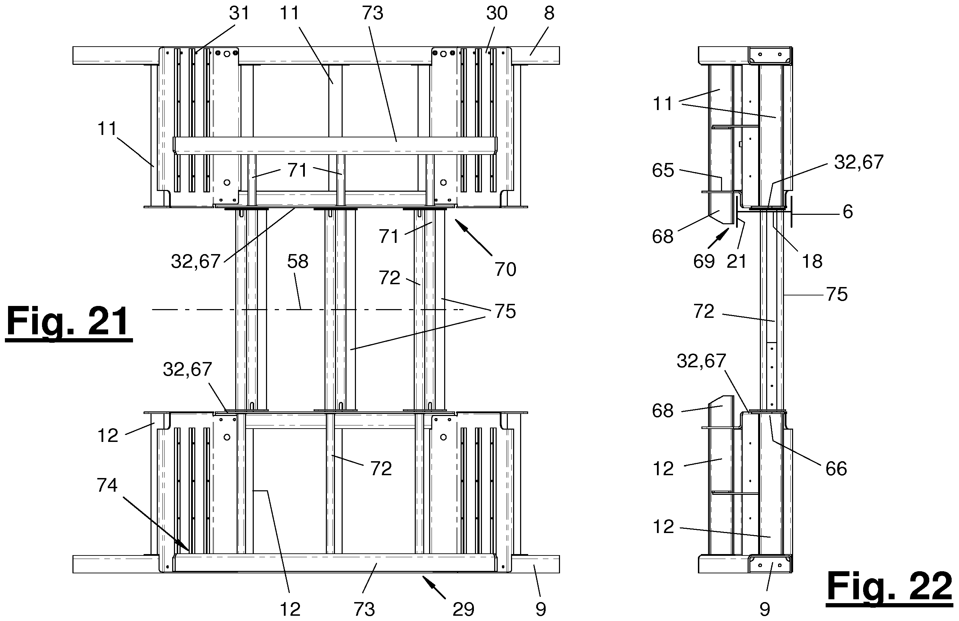

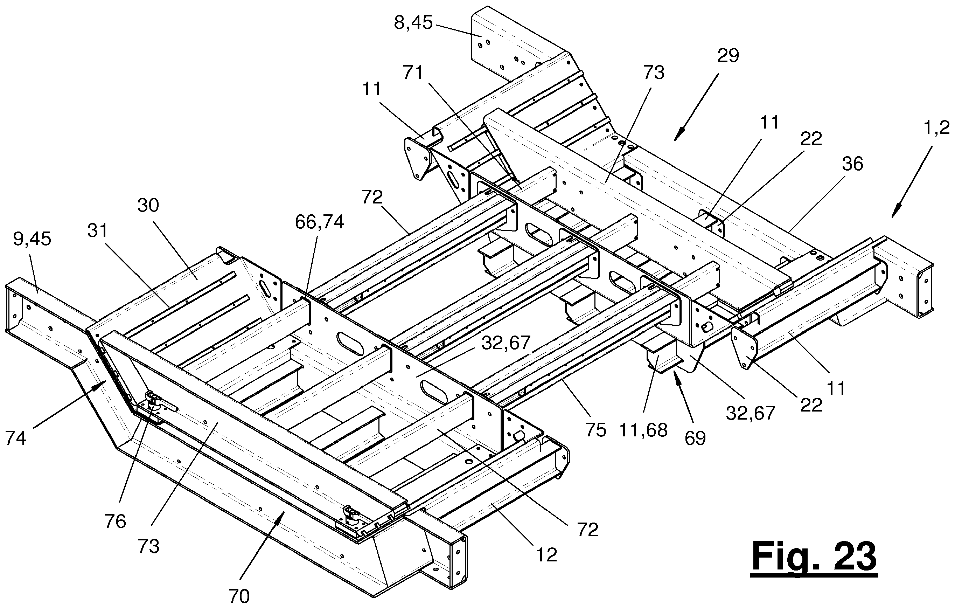

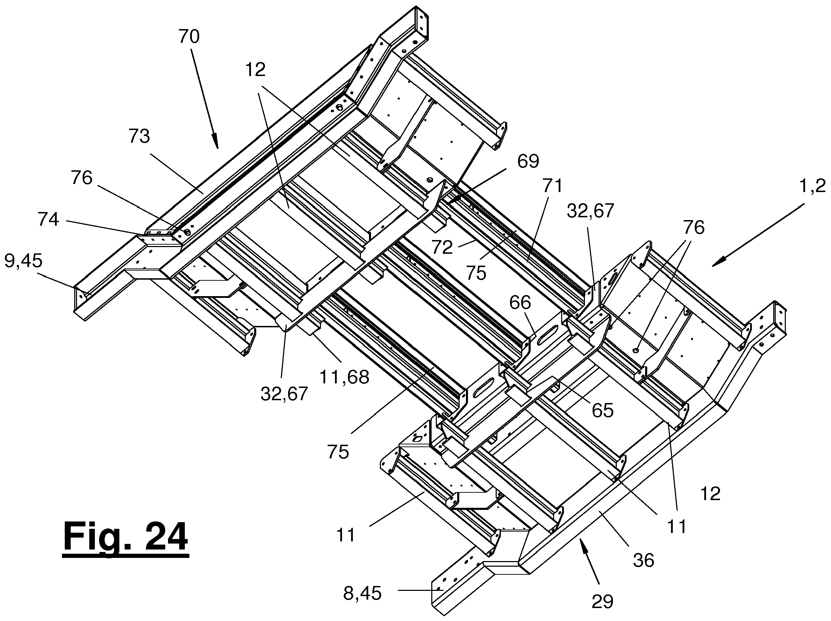

Für die Radmuldenaufhängung ist der Tragflansch (32) als abgekantete Tragplatte (67) ausgebildet, die mindestens einen Querträger (11,12) abstützt und die in Figur 22 in Seitenansicht und in Figur 23 und 24 perspektivisch dargestellt ist. Der obere Teil der Tragplatte (67) ist am Mittelsteg (18) des Längsträgers (6,7) (In Figur 22 ist der Übersicht halber nur ein Längsträger (6) dargestellt.) befestigt und weist eine oder mehrere Flanschöffnungen (66) für Teile der Muldenabdeckung (70) auf. Die Abkantung der z.B. außen am Mittelsteg (18) montierten Tragplatte (67) ist nach außen gerichtet und umgibt den unteren Quergurt (21) des Längsträgers (6,7). Der untere Bereich der Tragplatte (67) ragt von der Abkantung nach unten und weist eine oder mehrere Flanschöffnungen (65) für einen oder mehrere kurze Querträger (11,12) auf, welche den Muldenboden bilden.

Die kurzen Querträger (11,12) sind über die Tragplatte (67) hängend am jeweiligen Längsträger (6,7) befestigt und ragen mit ihrem zur Fahrgestellmitte gerichteten Trägerende (68) durch die Flanschöffnung (65). Die Flanschöffnung (65) kann an die Querträgerkontur, z.B. an eine I-Form, angepasst sein und den durchgesteckten Querträger (11,12) dicht umgeben. Das Trägerende (68) liegt an der Unterseite des jeweiligen Querträgers (6,7) an, wodurch eine Momentenstütze (69) für die in der Radmulde (29) aufgenommene Last zur Abstützung am Längsträger (6,7) und am Zentralrahmen (61) gebildet wird.

An ihrem äußeren Ende sind die kurzen Querträger (11,12) in der vorbeschriebenen Weise mit den äußeren Längsträgern (8,9) durch Schrauben, Bolzen oder dgl. verbunden und haben an dieser Seite die vorbeschriebene Gestaltung mit einer Querplatte (22) und deren Befestigung an der Anschlussstelle (16) der Mittelstege (18).

Die Radmulde (29) kann die in der perspektivischen Draufsicht (18) gezeigten Muldenwände (30) mit Kletterleisten (31) aufweisen. Ein in der Radmulde (29) aufgenommenes Fahrzeugrad ruht auf den kurzen Querträgern (11,12) und den ggf. an den Quergurten der Längsträger (6,8) und (7,9) abgestützten Muldenwände (30).

Eine Radmulde (29) kann mit einer Muldenabdeckung (70) versehen sein, welche zwischen einer zurückgezogenen Ruhestellung und einer ausgezogenen Arbeitsstellung beweglich ist und in der Arbeitsstellung die Muldenöffnung nach oben abdeckt. Die Muldenabdeckung (70) kann in der Arbeitsposition an den oberen Bereich des Ladebodens (25) fluchtend oder mit einem kleinen Absatz anschließen, wodurch eine im wesentlichen ebene Plattform (26) gebildet werden kann. Die Muldenabdeckung (70) ist am Fahrgestell (2), insbesondere am Zentralrahmen (61) und einem Seitenrahmen (62) beweglich gelagert und kann bevorzugt quer zur Längsachse (58) bewegt werden.

Die Muldenabdeckung (70) besteht aus mehreren Stützelementen (71,72,73), die in Arbeitsposition ggf. das Auflegen von einer oder mehreren Deckplatten (77) zur Bildung einer plattenförmigen Muldenabdeckung erlauben. In Figur 18 ist eine Deckplatte (77) dargestellt. Auf Deckplatten (77) kann alternativ verzichtet werden, wobei die Stützelemente (71,72,73) ein abdeckendes und tragendes Gerüst bilden.

Das eine Stützelement (73) kann als im wesentlichen aufrechte und mit abgekanteten Rändern versehene Stützplatte ausgebildet sein, welche in ihrer äußeren Kontur der Radmulde (29) und insbesondere der Ausrichtung und Neigung ihrer Muldenwände (30) nachgebildet sein kann.

Die z.B. trapezförmige Stützplatte (73) kann die Muldenöffnung seitlich verschließen. Sie kann eine Verriegelung (76) aufweisen, die für eine Fixierung in einer oder in mehreren verschiedenen Auszugstellungen sorgen kann. Die von Hand oder automatisch betätigbare Verriegelung (76) kann unterschiedlich ausgebildet sein. Sie weist z.B. einen Riegelbolzen an der Stützplatte (73) auf, der z.B. in der Arbeitsstellung an einem stationären Teil der Radmulde (29), z.B. an einem äußeren Längsträger (8,9) eingreift und insbesondere unter Federkraft in eine dortige Öffnung einrastet.

Die Stützplatte (73) kann zwischen der ausgefahrenen Arbeitsstellung im Bereich des äußeren Längsträgers (8,9) und der zurückgezogenen Ruhestellung nahe des inneren Längsträgers (6,7) quer zur Längsachse (58) hin und her bewegt werden. Sie kann außerdem eine Zwischenstellung einnehmen, in der sie innenseitig an einem in der Radmulde (29) aufgenommenen Fahrzeugrad anliegt und dieses seitlich führt. In der Ruhestellung kann die Verriegelung (76) ebenfalls wirksam sein.

Die anderen Stützelemente (71,72) sind z.B. als quergerichtete Stützträger ausgebildet, die an ihrem äußeren Ende mit jeweils einer Stützplatte (73) verbunden sind. Sie erstrecken sich in den Zentralrahmen (61) erstrecken und sind in dortigen Querträgern (75) verschieblich geführt. Die Stützträger (71,72) ragen dabei durch die vorerwähnte Flanschöffnung (66) in der ggf. vorhandenen Tragplatte (67) und durch eine entsprechende Öffnung im Mittelsteg (18) des zugehörigen Längsträgers (6,7) .

Die Stützträger (71,72) sind in der Höhe gegenüber den Längsträgern (6,7) ggf. abgesenkt. In der Arbeitsstellung können auf den Stützelementen (71,72) die Deckplatten (77) aufgelegt werden, die an den Enden außerdem auf Kletterleisten (31) in entsprechender Höhe zusätzlich aufliegen können.

In der gezeigten Ausführungsform sind auf der linken und rechten Fahrgestellseite jeweils drei Stützträger (71,72) verteilt und mit gegenseitigem Abstand angeordnet. Die Trägerlänge ist so bemessen, dass in der Ruheposition die Stützträger (71,72) an der Innenseite des jeweils gegenüberliegenden Längsträgers (6,7) anstoßen, der in diesem Bereich einen massiven Mittelsteg (18) aufweist. Die Durchlassöffnungen in den Längsträgern (6,7) für die Stützträger (71,72) sind dementsprechend in Längsrichtung zueinander versetzt angeordnet.

Im Bereich zwischen den Längsträgern (6,7) werden die Stützträger (71,72) an den vorerwähnten Querträgern (75) aufgenommen und geführt. Die z.B. mit einem wannenartigen Trägerprofil ausgebildeten Querträger (75) nehmen dabei jeweils ein Paar von gegeneinander gerichteten und eng nebeneinander liegenden Stützträgern (71,72) auf.

Die Muldenabdeckung (70) kann von Hand betätigt und bewegt werden, wobei z.B. manuell die Stützelemente (71,72,73) aus der Ruhestellung in die Arbeitsstellung gezogen und wieder zurückgeschoben werden. Alternativ ist ein Antrieb für diese Bewegungen möglich, der z.B. als Zahnstangen- oder Spindeltrieb, als Zylinder oder dgl. ausgebildet ist. Mit manueller Betätigung oder mit einem Antrieb können auch eine oder mehrere der vorgenannten Zwischenstellungen für eine seitliche Radführung eingenommen werden, wobei für diese Zwischenstellung(en) ebenfalls eine oder mehrere weitere Verriegelungen (76) vorhanden sein können.

Abwandlungen der gezeigten und beschriebenen Ausführungsformen sind in verschiedener Weise möglich. Der Aufbau des Fahrgestells (2) mit der Zahl und Anordnung der Fahrgestellteile bzw. Längs- und Querträger (6,13) kann variieren. Auch die Form des Ladebodens (25) ist veränderlich, wobei z.B. eine in Querrichtung durchgehende Radmulde (29) mit einer Absenkung im Zentralrahmenbereich oder die Anordnung mehrerer über die Fahrgestelllänge verteilter Radmulden (29) möglich ist. Ferner können die Merkmale der verschiedenen Ausführungsbeispiele beliebig miteinander kombiniert oder ausgetauscht werden.

Zum Offenbarungsumfang gehören ferner folgende Merkmale des Anhängers (1) für schwere Lasten, insbesondere Tiefladeanhängers, mit einem Ladeboden (25), der eine Zugeinrichtung (41) und ein rahmenartiges Fahrgestell (2) mit mehreren miteinander verbundenen Längsträgern (6,7,8,9) und Querträgern (10,11,12,13,75) aufweist. Die folgenden Merkmale sind jeweils einzeln oder in beliebiger Kombination untereinander und/oder in beliebiger Kombination mit den beanspruchten Merkmalen offenbart.

Das Fahrgestell (2) des Anhängers (1) weist mehrere Querträger (10,11,12,13,75) auf, die mit den Längsträgern (6,7,8,9) stumpf gestossen und durch bolzenartige Verbindungselemente (24) verbunden sind.

Das Fahrgestell (2) des Anhängers (1) weist einen Zentralrahmen (61) und Seitenrahmen (62) auf, die lösbar miteinander verbunden sind.

Das Fahrgestell (2) des Anhängers (1) ist als Baukastensystem mit variabel anordenbaren Längs- und Querträgern (6 - 13,75) ausgebildet.

An einem Längsträger (6,7) des Fahrgestells (2) stossen an beiden Seiten Querträger (10,11,12,13,75) an und sind angeschlossen.

Der Querträger (10,11,12,13,75) weist ein Trägerprofil (15) mit mindestens einer endseitigen Querplatte (22) auf.

Der Längsträger (6,7,8,9) weist ein Trägerprofil (14) mit einem aufrechten Steg (18) und mindestens einer Anschlussstelle (16) für einen einseitigen oder beidseitigen Anschluss eines Querträgers (10,11,12,13) auf.

Die Querplatte (22) des Querträgers (10,11,12,13,75) und der Steg (18) des Längsträgers (6,7,8,9) weisen mehrere Öffnungen für Verbindungselemente (24) auf.

Der Steg (18) des Längsträgers (6,7,8,9) weist einen Anschlussraster auf.

Die Trägerprofile (14,15) der Längsträger (6,7,8,9) und der Querträger (10,11,12,13,75) weisen einen aufrechten Steg (18,19) mit einem Ober- und Untergurt (20,21) auf.

Eine Vielzahl oder alle Fahrgestellteile (6 - 13,75) des Anhängers (1) sind verbolzt oder verschraubt.

Die Verbindungselemente (24) sind als Schließringbolzen ausgebildet.

Das Fahrgestell (2) weist mehrere kurze und nur über einen Teil der Fahrzeugbreite reichende Querträger (10,11,12) auf, die sich zwischen benachbarten Längsträgern (6,7,8,9) erstrecken und mit diesen Längsträgern (6,7,8,9) verbolzt oder verschraubt sind.

Das Fahrgestell (2) weist einen oder mehrere lange Querträger (13) auf, die mit außen liegenden Längsträgern (8,9) verbunden sind.

Der lange Querträger (13) ist unterhalb von innen liegenden Längsträgern (6,7) angeordnet.

Das Fahrgestell (2) weist Querträger (10,11,12,13,63,75) in unterschiedlicher Höhe auf.

Das Fahrgestell (2) weist drei, vier oder mehr parallele Längsträger (6,7,8,9) auf, zwischen denen kurze Querträger (10,11,12) miteinander fluchtend angeordnet sind.

Tiefer liegende Querträger (11,12,13) eines abgesenkten Bereichs des Seitenrahmens (62) des Fahrgestells (2), insbesondere einer Radmulde (29), sind unterhalb eines Zentralrahmens (61) angeordnet und an dessen Längsträgern (6,7) mit einem Tragflansch (32) hängend befestigt.

Tiefer liegende Querträger (11,12) eines abgesenkten Bereichs des Seitenrahmens (62) des Fahrgestells (2), insbesondere einer Radmulde (29), sind unterhalb eines Zentralrahmens (61) hängend gehalten und mit einem innenseitigen Trägerende (68) unter Bildung einer Momentenstütze (69) an einem benachbarten Längsträger (6,7) anliegend abgestützt.

Tiefer liegende Querträger (11,12,13) eines abgesenkten Bereichs des Seitenrahmens (62) des Fahrgestells (2), insbesondere einer Radmulde (29), sind am anderen außenseitigen Ende an eine Absenkung (36) eines äußeren Längsträgers (8,9) angeschlossen und gehalten.

An einer Radmulde (29) ist mindestens eine schräge Muldenwand (30) mit Kletterleisten (31) an unterschiedlich hohen Querträgern (11,12,13) angeordnet.

Eine Muldenabdeckung (70) ist beweglich am Fahrgestell (2) gelagert und zwischen einer ausgefahrenen Arbeitsstellung und einer eingefahrenen Ruhestellung sowie ggf. einer Zwischenstellung bewegbar.

Eine Muldenabdeckung (70) weist mehrere Stützelemente (71,72,73) auf, die quer zur Längsachse (58) beweglich am Fahrgestell (2) gehalten und geführt (74) sind.

Eine Muldenabdeckung (70) weist eine im Radmuldenbereich aufliegende Stützplatte (73) mit mehreren Stützträgern (71,72) auf, welche sich in den Zentralrahmen (61) erstrecken und in dortigen Querträgern (75) verschieblich geführt sind.

Die inneren Längsträger (6,7) weisen Trägerprofile (14) in I-Form auf.

Die äußeren Längsträger (8,9) weisen Trägerprofile (14) in C-Form auf.

Die Querträger (10,11,12,13,63) weisen Trägerprofile (15) in I-Form auf.

Die formschlüssige Abstützung (46) von Modulen (3,4) des Fahrgestells (2) weist eine oder mehrere Gruppen von ineinander greifenden Stützplatten oder Scherplatten (48,49) an den Trägerteilen (44,45) auf.

Die gepaarten Stützplatten (48,49) weisen ineinander greifende Vorsprünge (49), insbesondere Leisten, und Vertiefungen (50), insbesondere Nuten, auf.

Die Vorsprünge (49) und Vertiefungen (50) weisen konische Seitenwände und einen Spannsitz auf.

Das Fahrzeug (1) weist im vorderen Bereich einen Schwanenhals (17) auf.

Ein Ladeboden (25) des Anhängers (1) weist eine oder mehrere abgesenkte Radmulden (29) auf.

### BEZUGSZEICHENLISTE

- 1: Fahrzeug, Anhänger, Tieflader
- 2: Fahrgestell, Chassis
- 3: Modul, Vorderteil
- 4: Modul, Hinterteil
- 5: Verbindungsstelle
- 6: Fahrgestellteil, Längsträger innen
- 7: Fahrgestellteil, Längsträger innen
- 8: Fahrgestellteil, Längsträger außen
- 9: Fahrgestellteil, Längsträger außen
- 10: Fahrgestellteil, Querträger kurz innen
- 11: Fahrgestellteil, Querträger kurz außen
- 12: Fahrgestellteil, Querträger kurz außen
- 13: Fahrgestellteil, Querträger lang
- 14: Trägerprofil von Längsträger
- 15: Trägerprofil von Querträger
- 16: Anschlussstelle
- 17: Kröpfung, Schwanenhals
- 18: Mittelsteg Längsträger
- 19: Mittelsteg Querträger
- 20: Obergurt
- 21: Untergurt
- 22: Querplatte, Querflansch
- 23: Öffnung
- 24: Verbindungselement, Schließringbolzen
- 25: Ladeboden
- 26: Plattform
- 27: Tragboden
- 28: Heckschräge, Auffahrschräge
- 29: Radmulde
- 30: Muldenwand
- 31: Kletterleiste
- 32: Tragflansch
- 33: Abdeckung
- 34: Ablageboden
- 35: Ausleger
- 36: Absenkung
- 37: Achse, Achsgruppe hinten
- 38: Achse, Achsgruppe vorn
- 39: Achsbock
- 40: Radausschnitt
- 41: Zugeeinrichtung, Deichsel, Satteleinrichtung
- 42: Drehschemel
- 43: Drehachse
- 44: Anhängevorrichtung
- 45: Trägerteil vorn
- 46: Trägerteil hinten
- 47: formschlüssige Abstützung, Scherplattenverbindung
- 48: Stützplatte, Scherplatte an Vorderteil
- 49: Stützplatte, Scherplatte an Hinterteil
- 50: Vorsprung, Leiste
- 51: Vertiefung, Nut
- 52: Sandwichplatte
- 53: Platte oben
- 54: Platte unten
- 55: Steg, Strebe
- 56: Hohlraum
- 57: Ausschnitt, Schemelausschnitt
- 58: Längsachse
- 59: Kanal
- 60: Stützrahmen
- 61: Zentralrahmen
- 62: Seitenrahmen
- 63: Querträger geschweißt
- 64: Verbindungsplatte
- 65: Flanschöffnung
- 66: Flanschöffnung
- 67: Tragplatte
- 68: Trägerende
- 69: Momentenstütze
- 70: Muldenabdeckung
- 71: Stützelement, Stützträger
- 72: Stützelement, Stützträger
- 73: Stützelement, Stützplatte
- 74: Führung
- 75: Querträger mit Führung
- 76: Verriegelung
- 77: Deckplatte

## Patentansprüche

1. Anhänger für schwere Lasten, insbesondere Tiefladeanhänger, mit einem Ladeboden (25), wobei der Anhänger (1) eine Zugeinrichtung (41) mit einer Drehachse (43) und ein rahmenartiges Fahrgestell (2) mit mehreren miteinander verbundenen Längsträgern (6,7,8,9) und Querträgern (10,11,12,13,75) aufweist, wobei das Fahrgestell (2) an der Vorderseite eine Sandwichplatte (52) mit einer oberen und einer unteren Platte (53,54) und Stützstegen (55) sowie einem Hohlraum (56) dazwischen aufweist, **dadurch gekennzeichnet, dass** die Stützstege (55) in einem Kranz um die Drehachse (43) angeordnet sind.

2. Anhänger nach nach Anspruch 1, **dadurch gekennzeichnet, dass** die untere Platte (54) einen vorzugsweise kreisrunden Ausschnitt (57) im Bereich der Drehachse (43) aufweist.

3. Anhänger nach Anspruch 2, **dadurch gekennzeichnet, dass** die Stützstege (55) am Rand des Ausschnitts (57) enden.

4. Anhänger nach einem der vorhergehenden Ansprüche, **dadurch gekennzeichnet, dass** mehrere Stützstege (55) entlang oder schräg zur Längsachse (58) des Fahrzeugs (1) ausgerichtet sind.

5. Anhänger nach einem der vorhergehenden Ansprüche, **dadurch gekennzeichnet, dass** die Sandwichplatte (52) eine Höhe von ca. 120 mm aufweist.

6. Anhänger nach einem der vorhergehenden Ansprüche, **dadurch gekennzeichnet, dass** zumindest ein Teil des Fahrgestells (2), insbesondere ein Zentralrahmen (61), miteinander verschweißte Längs- und Querträger (6,7,63) aufweist.

7. Anhänger nach einem der vorhergehenden Ansprüche, **dadurch gekennzeichnet, dass** das Fahrgestell (2) einen Zentralrahmen (61) mit Längsträgern (6,7) und kurzen Querträgern (10,63,75) sowie Seitenrahmen (62) mit einem Längsträger (8,9) und kurzen Querträgern (11,12) aufweist.

8. Anhänger nach einem der vorhergehenden Ansprüche, **dadurch gekennzeichnet, dass** an einem Zentralrahmen (61) des Fahrgestells (2) eine oder mehrere Achsen oder Achsgruppen (37,38) angeordnet und gehalten sind.

9. Anhänger nach einem der vorhergehenden Ansprüche, **dadurch gekennzeichnet, dass** ein Seitenrahmen (62) des Fahrgestells (2) einen abgesenkten Bereich, insbesondere eine Radmulde (29), mit tiefer liegenden Querträgern (11,12,13) aufweist.

10. Anhänger nach einem der vorhergehenden Ansprüche, **dadurch gekennzeichnet, dass** das Fahrgestell (2) eine Radmulde (29) und eine bewegliche Muldenabdeckung (70) aufweist.

11. Anhänger nach einem der vorhergehenden Ansprüche, **dadurch gekennzeichnet, dass** das Fahrgestell (2) modular ausgebildet ist, wobei ein Zentralrahmen (61) und beidseitige Seitenrahmen (62) Module bilden.

12. Anhänger nach einem der vorhergehenden Ansprüche, **dadurch gekennzeichnet, dass** das Fahrgestell (2) modular ausgebildet ist, wobei die Module (3,4) geteilte (44,45) Längsträger (6,7,8,9) besitzen, die an der Verbindungsstelle (5) mindestens eine formschlüssige Abstützung (46) mit Verbindungselementen (24) aufweisen.

13. Anhänger nach einem der vorhergehenden Ansprüche, **dadurch gekennzeichnet, dass** das Fahrzeug (1) einen ebenen oder gekröpften Ladeboden (25) aufweist.

14. Anhänger nach einem der vorhergehenden Ansprüche, **dadurch gekennzeichnet, dass** der Ladeboden (24) als durchgehende Plattform (25) ausgebildet ist.

## Claims

1. Trailer for heavy loads, in particular flat-bed trailer, with a loading platform (25), wherein the trailer (1) has a towing device (41) with an axis of rotation (43) and a frame-like chassis (2) with a plurality of interconnected longitudinal members (6, 7, 8, 9) and cross members (10, 11, 12, 13, 75), wherein the chassis (2) has, on the front side, a sandwich plate (52) with an upper and a lower plate (53, 54) and supporting webs (55), and also with a cavity (56) in between, **characterized in that** the supporting webs (55) are arranged in a ring around the axis of rotation (43).

2. Trailer according to Claim 1, **characterized in that** the lower plate (54) has a preferably circular cut-out (57) in the region of the axis of rotation (43).

3. Trailer according to Claim 2, **characterized in that** the supporting webs (55) end at the edge of the cut-out (57).

4. Trailer according to one of the preceding claims, **characterized in that** a plurality of supporting webs (55) are oriented along or obliquely with respect to the longitudinal axis (58) of the vehicle (1).

5. Trailer according to one of the preceding claims, **characterized in that** the sandwich plate (52) has a height of approx. 120 mm.

6. Trailer according to one of the preceding claims, **characterized in that** at least part of the chassis (2), in particular a central frame (61), has longitudinal members and cross members (6, 7, 63) which are welded to one another.

7. Trailer according to one of the preceding claims, **characterized in that** the chassis (2) has a central frame (61) with longitudinal members (6, 7) and short cross members (10, 63, 75), and also side frames (62) with a longitudinal member (8, 9) and short cross members (11, 12).

8. Trailer according to one of the preceding claims, **characterized in that** one or more axles or axle assemblies (37, 38) are arranged and held on a central frame (61) of the chassis (2).

9. Trailer according to one of the preceding claims, **characterized in that** a side frame (62) of the chassis (2) has a lowered region, in particular a wheel recess (29), with lower cross members (11, 12, 13).

10. Trailer according to one of the preceding claims, **characterized in that** the chassis (2) has a wheel recess (29) and a movable recess covering (70).

11. Trailer according to one of the preceding claims, **characterized in that** the chassis (2) is of modular design, wherein a central frame (61) and side frames (62) on both sides form modules.

12. Trailer according to one of the preceding claims, **characterized in that** the chassis (2) is of modular design, wherein the modules (3, 4) have divided (44, 45) longitudinal members (6, 7, 8, 9) which have at least one form-fitting support (46) with connecting elements (24) at the connecting point (5).

13. Trailer according to one of the preceding claims, **characterized in that** the vehicle (1) has a flat or bent loading platform (25).

14. Trailer according to one of the preceding claims, **characterized in that** the loading platform (24) is designed as a continuous platform (25).

## Revendications

1. Remorque pour charges lourdes, en particulier remorque surbaissée, comprenant un fond de chargement (25), la remorque (1) présentant un dispositif de traction (41) avec un axe de rotation (43) et un mécanisme de roulement de type châssis (2) comprenant plusieurs longerons (6, 7, 8, 9) et traverses (10, 11, 12, 13, 75) connectés les uns aux autres, le mécanisme de roulement (2) présentant, au niveau du côté avant, une plaque sandwich (52) avec une plaque supérieure et une plaque inférieure (53, 54), et des membrures de support (55) ainsi qu'une cavité (56) entre elles, **caractérisée en ce que** les membrures de support (55) sont disposées en couronne autour de l'axe de rotation (43).

2. Remorque selon la revendication 1,
**caractérisée en ce que** la plaque inférieure (54) présente une découpe de préférence circulaire (57) dans la région de l'axe de rotation (43).

3. Remorque selon la revendication 2, **caractérisée en ce que** les membrures de support (55) se terminent au bord de la découpe (57).

4. Remorque selon l'une quelconque des revendications précédentes, **caractérisée en ce que** plusieurs membrures de support (55) sont orientées le long de, ou obliquement par rapport à, l'axe longitudinal (58) du véhicule (1).

5. Remorque selon l'une quelconque des revendications précédentes, **caractérisée en ce que** la plaque sandwich (52) présente une hauteur d'environ 120 mm.

6. Remorque selon l'une quelconque des revendications précédentes, **caractérisée en ce qu'**au moins une partie du mécanisme de roulement (2), en particulier un châssis central (61), présente des longerons et des traverses (6, 7, 63) soudés ensemble.

7. Remorque selon l'une quelconque des revendications précédentes, **caractérisée en ce que** le mécanisme de roulement (2) présente un châssis central (61) avec des longerons (6, 7) et des traverses courtes (10, 63, 75) ainsi qu'un châssis latéral (62) avec un longeron (8, 9) et des traverses courtes (11, 12) .

8. Remorque selon l'une quelconque des revendications précédentes, **caractérisée en ce qu'**un ou plusieurs axes ou groupes d'axes (37, 38) sont disposés et retenus au niveau d'un châssis central (61) du mécanisme de roulement (2).

9. Remorque selon l'une quelconque des revendications précédentes, **caractérisée en ce qu'**un châssis latéral (62) du mécanisme de roulement (2) présente une région surbaissée, en particulier une auge de roue (29) avec des traverses situées plus bas (11, 12, 13).

10. Remorque selon l'une quelconque des revendications précédentes, **caractérisée en ce que** le mécanisme de roulement (2) présente une auge de roue (29) et un recouvrement d'auge mobile (70).

11. Remorque selon l'une quelconque des revendications précédentes, **caractérisée en ce que** le mécanisme de roulement (2) est réalisé sous forme modulaire, un châssis central (61) et un châssis latéral (62) de chaque côté formant des modules.

12. Remorque selon l'une quelconque des revendications précédentes, **caractérisée en ce que** le mécanisme de roulement (2) est réalisé sous forme modulaire, les modules (3, 4) possédant des longerons (6, 7, 8, 9) divisés (44, 45) qui présentent, au niveau de la zone de connexion (5), au moins un support par engagement par correspondance de formes (46) avec des éléments de liaison (24).

13. Remorque selon l'une quelconque des revendications précédentes, **caractérisée en ce que** le véhicule (1) présente un fond de chargement (25) plan ou coudé.

14. Remorque selon l'une quelconque des revendications précédentes, **caractérisée en ce que** le fond de chargement (24) est réalisé sous forme de plate- forme continue (25).
